# EUROPEAN PATENT APPLICATION

(11) **EP 3 258 067 A1**
(43) Date of publication of application: **20.12.2017**
(21) Application number: 17174732.2
(22) Date of filing: 07.06.2017
(51) Int. Cl.: F01D 17/08, F01D 21/00

(54) **DETECTING COMBUSTION ANOMALIES IN GAS TURBINES USING AUDIO OUTPUT**

(30) Priority: 14.06.2016 US 201615182125
(71) Applicant: General Electric Company, Schenectady, NY 12345 (US)
(72) Inventor: FULLER, Jason Dean, Greenville, SC South Carolina 29615-4614 (US); CROTHERS, Sarah Lori, Greenville, SC South Carolina 29615-4614 (US); SOPCIC, Paige Marie, Boston, MA Massachusetts 02111-2621 (US); FLAVIN, Daniel Joseph, Greenville, SC South Carolina 29615-4614 (US)
(74) Representative: Fischer, Michael Maria

(57) **Abstract**

In one embodiment, a turbine system (10) includes a combustion system (20) comprising a plurality of combustion cans (23), a number of sensors (22), each of the number of sensors (22) coupled to a respective combustion can (23) of the number of combustion cans (23), and a controller (24). The controller (24) includes a memory (26, 27) storing one or more processor-executable routines and a processor (28, 29) configured to access and execute the one or more routines encoded by the memory (26, 27). The one or more routines, when executed cause the processor (28, 29) to receive one or more signals from the number of sensors (22), convert the one or more signals to audio output (34), and output the converted audio output (34) via one or more audio output devices (30, 31).

## Description

### BACKGROUND

The subject matter disclosed herein relates to turbomachinery, and more specifically, to detecting combustion anomalies, events, or problems in gas turbines using audio output.

Plant operators may be removed from the physical noises of the equipment (e.g., gas turbines) in plants as the equipment is running. For example, the operator may be monitoring the operation of the plant at a location remote from the plant, sound-proofing of the equipment operating in the plants may reduce the audible noise emitted, or the like. As such, the operators oftentimes rely on alarms created by a control system to protect the equipment. However, operators may become desensitized to or ignore the alarms for significant periods of time, which may lead to an undesirable operating condition of the equipment occurring.

### BRIEF DESCRIPTION

Certain embodiments commensurate in scope with the originally claimed subject matter are summarized below. These embodiments are not intended to limit the scope of the claimed subject matter, but rather these embodiments are intended only to provide a brief summary of possible forms of the subject matter. Indeed, the subject matter may encompass a variety of forms that may be similar to or different from the embodiments set forth below.

In one embodiment, a turbine system includes a combustion system comprising a number of combustion cans, a number of sensors, each of the number of sensors coupled to a respective combustion can of the number of combustion cans, and a controller. The controller includes a memory storing one or more processor-executable routines and a processor configured to access and execute the one or more routines encoded by the memory. The one or more routines, when executed cause the processor to receive one or more signals from the number of sensors, convert the one or more signals to audio output, and output the converted audio output via one or more audio output devices.

In one embodiment, a controller includes a memory storing one or more processor-executable routines and a processor configured to access and execute the one or more routines encoded by the memory. The one or more routines, when executed cause the processor to receive one or more signals from a number of sensors, wherein each of the number of sensors are coupled to a respective combustion can of a number of combustion cans included in a combustion system of a turbine system, convert the one or more signals to audio output, and output the converted audio output via one or more audio output devices.

In one embodiment, one or more tangible, non-transitory computer-readable mediums includes instructions that, when executed by one or more processors, cause the one or more processors to receive one or more signals from a number of sensors. Each of the number of sensors are coupled to a respective combustion can of a number of combustion cans included in a combustion system of a turbine system, and the signals are indicative of pressure inside each of the number of combustion cans during combustion. The instructions, when executed by the one or more processors, also cause the one or more processors to convert the one or more signals to audio output and output the converted audio output via one or more audio output devices.

### BRIEF DESCRIPTION OF THE DRAWINGS

These and other features, aspects, and advantages of the present subject matter will become better understood when the following detailed description is read with reference to the accompanying drawings in which like characters represent like parts throughout the drawings, wherein:
FIG. 1 is a block diagram of a turbine system that enables detection of combustion anomalies, events, or problems via audio output, in accordance with an embodiment;
FIG. 2 is a schematic diagram of a combustion system including combustion cans with sensors attached thereto that output respective signals to a controller, in accordance with an embodiment;
FIG. 3 is a screenshot of a graphical user interface for utilization in listening to audio output from a combustion system, in accordance with an embodiment; and
FIG. 4 is a flow chart illustrating an embodiment of a method for detecting combustion anomalies, events, or problems via audio output, in accordance with an embodiment.

### DETAILED DESCRIPTION

One or more specific embodiments of the present subject matter will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present subject matter, the articles "a," "an," "the," and "said" are intended to mean that there are one or more of the elements. The terms "comprising," "including," and "having" are intended to be inclusive and mean that there may be additional elements other than the listed elements.

As previously discussed, plant operators may ignore or become desensitized to certain alarms related to gas turbine health that are emitted at control stations remote from the plant. As such, gas turbine equipment issues may arise at the plants that result in significant equipment downtime (e.g., the equipment is not operational) or maintenance costs. This issue may be particularly relevant for gas turbine combustion. Thus, it is now generally recognized that improved techniques for detecting gas turbine combustion anomalies, events, or problems are desirable.

Accordingly, embodiments of the present disclosure generally relate to a system and method for detecting gas turbine combustion anomalies, events, or problems using audio output. That is, some embodiments enable gas turbine operators to monitor potential combustion anomalies, events, or problems via audible noise obtained from sensors in the combustion system. As described below, the sensors may be combustion dynamics pressure sensors that are already present in the combustion system of the gas turbine. Leveraging the existing combustion dynamics pressure sensors may reduce new instrumentation and installation costs. In some embodiments, the sensors may emit signals to a controller and/or computing device executing a software application. The software application may cause a processor to convert the signals into audio signals and output the audio signals via audio output devices of the controller and/or computing device. The plant operators may listen to the combustion system and detect anomalies, events, or problems based on a change in the sound of the combustion system, rather than solely relying on controller alarms.

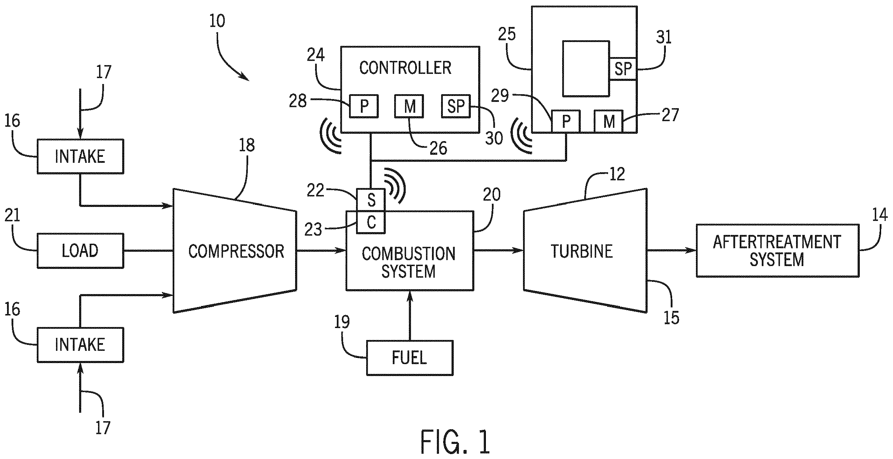

Turning now to the drawings, FIG. 1 illustrates a block diagram of a turbine system 10 that that enables detection of combustion anomalies, events, or problems via audio output, in accordance with an embodiment of the present disclosure. The turbine system 10 includes a turbine engine 12 and an aftertreatment system 14. In certain embodiments, the turbine system 10 may be a power generation system. The turbine system 10 may use liquid or gas fuel, such as natural gas and/or a hydrogen-rich synthetic gas, to run the turbine system 10. As shown, the turbine system 10 includes an air intake section 16, a compressor 18, a combustion system 20, and the turbine 12. The turbine 12 may be drivingly coupled to the compressor 18 via a shaft. In operation, air enters the turbine system 10 through the air intake section 16 (indicated by the arrows 17) and is pressurized in the compressor 18. The compressor 18 may include a number of compressor blades coupled to the shaft. The rotation of the shaft causes rotation of the compressor blades, thereby drawing air into the compressor 18 and compressing the air prior to entry into the combustion system 20.

As compressed air exits the compressor 18 and enters the combustion system 20, the compressed air 17 may be mixed with fuel 19 for combustion within one or more combustion cans. For example, the combustion cans may include one or more fuel nozzles that may inject a fuel-air mixture into the combustion cans in a suitable ratio for optimal combustion, emissions, fuel consumption, power output, and so forth. The combustion of the air 17 and fuel 19 generates hot pressurized exhaust gases, which may then be utilized to drive one or more turbine blades within the turbine 12. In operation, the combustion gases flowing into and through the turbine 12 flow against and between the turbine blades, thereby driving the turbine blades and, thus, the shaft into rotation to drive a load 21, such as an electrical generator in a power plant. As discussed above, the rotation of the shaft also causes blades within the compressor 18 to draw in and pressurize the air received by the intake 16.

The combustion gases that flow through the turbine 12 may exit the downstream end 15 of the turbine 12 as a stream of exhaust gas. The exhaust gas stream may continue to flow in the downstream direction towards the aftertreatment system 14. For instance, the downstream end 15 may be fluidly coupled to the aftertreatment system 14. As a result of the combustion process, the exhaust gas may include certain byproducts, such as nitrogen oxides (NOₓ), sulfur oxides (SOₓ), carbon oxides (COₓ), and unburned hydrocarbons. Due to certain regulations, the aftertreatment system 14 may be employed to reduce or substantially minimize the concentration of such byproducts prior to releasing the exhaust gas stream into the atmosphere.

One or more sensors 22 may be included in the combustion system 20. In some embodiments, the sensors 22 may include any type of combustion dynamic pressure sensors. The sensors 22 may already be included in the assembled combustion system 20 and no other instrumentation may be added to the combustion system 20 to perform certain embodiments of the present disclosure. In some embodiments, the sensors 22 may be configured to sense pressure signals or waves in any desirable amplitude and frequency range within the respective combustion cans 23. The sensors 22 may include piezoelectric materials that generate electric signals resulting from pressure. In some embodiments, the sensors 22 may include Micro-Electrico-Mechanical Systems (MEMs) sensors, Hall effect sensors, magnetorestrictive sensors, or any other sensor designed to sense vibration, pressure, or the like. Additionally, the sensors 22 may include optical sensors that are configured to measure combustion dynamics optically. The sensors 22 may include communication circuitry that enables the sensors 22 to be communicatively coupled to a controller 24 and/or a computing device 25 via a wireless (e.g., Bluetooth® Low Energy, ZigBee®, WiFi®) or wired connection (e.g., Ethernet). In some embodiments, the computing device 25 may include a laptop, a smartphone, a tablet, a personal computer, a human-machine interface, or the like.

In some embodiments, the sensors 22 may include a microphone or array of microphones included in the combustion system 20 and/or disposed in portions of the turbine system 10 external to the combustion system 20. For example, the microphones or array of microphones may be disposed within or near the inlet, the exhaust stack, the compressor 18, the turbine 12, or the like. In some embodiments, the microphone or array of microphones may send detected sound indicative to the controller 24 for use in a sound level meter or series of sound level meters. In some embodiments the detected sound may be indicative of combustion dynamics.

During combustion, the sensors 22 may transmit signals indicative of pressure (e.g., static, dynamic) or vibration to the controller 24 and/or the computing device 25. The controller 24 and/or the computing device 25 may receive the signals from the sensors 22 and convert the signals into audio signals suitable for outputting (e.g., via an audio output device associated with the computing device 25). As such, the controller 24 and/or the computing device 25 may each include one or more tangible, non-transitory computer-readable mediums (e.g., memories 26 and 27) storing computer instructions that, when executed by a respective processor 28 and 29 of the controller 24 and/or the computing device 25, cause the processor 28 and 29 to receive the signals, convert the signals to audio signals, and output the audio signals via a respective audio output device 30 and 31 (e.g., speaker, bullhorn, megaphone, siren, headphone, amplifier, public address (PA) system, etc.). It should be noted that non-transitory merely indicates that the media is tangible and not a signal. Further, the controller 24 and/or the computing device 25 may include communication circuitry, such as a network interface, that is configured to receive the signals and transmit them to the processors 28 and 29.

The processors 28 and 29 may be any type of computer processor or microprocessor capable of executing computer-executable code. Moreover, the processors 28 and 29 may include multiple processors or microprocessors, one or more "general-purpose" processors or microprocessors, one or more special-purpose processors or microprocessors, and/or one or more application specific integrated circuits (ASICS), or some combination thereof. For example, the processor 28 may include one or more reduced instruction set (RISC) processors.

The memories 26 and 27 may be any suitable articles of manufacture that can serve as media to store processor-executable routines, code, data, or the like. These articles of manufacture may represent computer-readable media (e.g., any suitable form of memory or storage) that may store the processor-executable code or routines used by the respective processors 28 and 29 to perform the presently disclosed techniques. For example, the memories 26 and 27 may include volatile memory (e.g., a random access memory (RAM)), nonvolatile memory (e.g., a read-only memory (ROM)), flash memory, a hard drive, or any other suitable optical, magnetic, or solid-state storage medium, or a combination thereof. The memories 26 and 27 may also be used to store any data (e.g., recordings of the audio output for each of the combustion cans for a desired amount of time), analysis of the data, the software application, and the like.

Generally, the processors 28 and 29 may execute software applications that include a graphical user interface (GUI) that enables a user to select which combustion cans (or all combustion cans) in the combustion system 20 to listen to via the audio output devices 30 and 31 of the controller 24 and/or the computing device 25. Additional features relating to the GUI are discussed below. As may be appreciated, the operator may listen to the audio representing combustion pressure or dynamics in the selected combustion can(s) at a location remote from the actual combustion system 20 using the controller 24 and/or the computing device 25. In some embodiments, the operator may be in relative close proximity to the combustion system 20 while listening to the audio output via the controller 24 and/or the computing device 25 during combustion.

Based on the audio output that is output via the audio output devices 30 and/or 31, the operator may determine that there is an anomaly, event, or problem occurring in the combustion system 20. Indeed, the user may pinpoint which combustion can 23 is experiencing the anomaly, event, or problem by using the disclosed techniques. For example, the operator may discern that the current noise emitted from the combustion can(s) 23 during combustion sounds different (e.g., abnormal) than the noise emitted from those combustion can(s) 23 during combustion when the combustion system 20 is operating as expected. As such, the operator may perform a preventative action, such as shut down the turbine system 10, check the combustion can(s) 23 identified as emitting the irregular sound, perform maintenance on the combustion system 20, perform replacement of components in the combustion system 20, schedule maintenance and/or replacement, or the like.

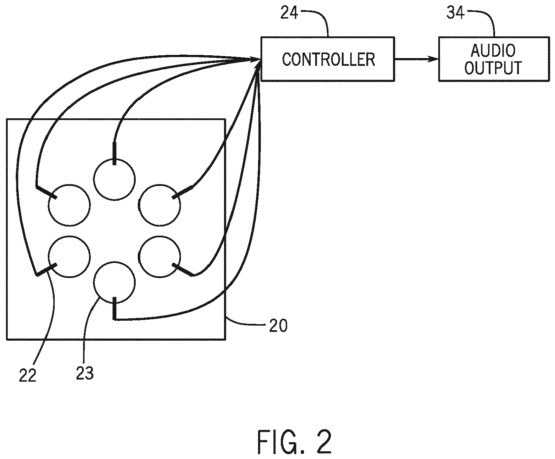

FIG. 2 is a schematic diagram of the combustion system 20 including the combustion cans 23 with sensors 22 attached thereto that output respective signals to the controller 24, in accordance with an embodiment. Although the signals are shown as sent to the controller 24, it should be noted that the signals may be also sent to the computing device 25, which may perform similar functionality related to converting the signals to audio and outputting the audio as the controller 24. As depicted, a respective sensor 22 may be coupled to each combustion can 23 in the combustion system 20. Thus, if there are six combustion cans 23 in the combustion system 20, then six sensors 22 may be used (e.g., one sensor 22 coupled to each respective combustion can 23). It should be noted that, in some embodiments, there may not be a one-to-one relationship between the number of sensors 22 and the number of combustion cans 23. For example, one sensor 22 may be used to monitor all of the combustion cans 23, a few sensors 22 may be used to monitor all of the combustion cans 23, or more than one sensor 22 may be used to monitor a single combustion can 23.

In some embodiments, the combustion dynamic pressure sensors may be probes that are partially inserted into the combustion cans 23. The signals emitted by the sensors 22 may be sent to the controller 24 and/or the computing device 25 that include a software application that may convert the signals into audio output 34 and emit the audio output 34.

It should be noted that the software application may be downloadable from an application distribution platform installed on the controller 24 and/or the computing device 25. The application distribution platform may be proprietary and private. Thus, in some embodiments, downloading of the software application that enables listening to the audio representative of the pressure inside the combustion cans 23 during combustion may be restricted to authorized users. In this way, the application distribution platform may perform authentication of the controller 24 and/or the computing device 25 that requests to download the software application.

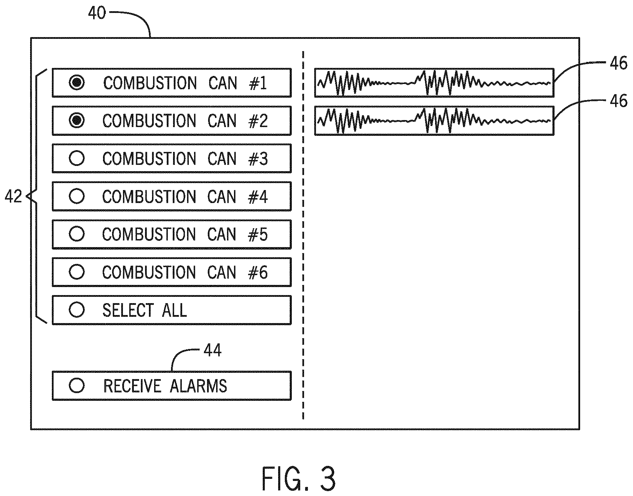

FIG. 3 is a screenshot of a graphical user interface (GUI) 40 that displays a list 42 of combustion can(s) 23 available for audio output and receives a user selection of which combustion can(s) 23 for which to provide audio output, in accordance with an embodiment. Additionally, the GUI 40 displays an input selector 44 related to whether the user desires to receive control alarms related to the turbine system 10. As depicted, the list 42 includes radio button selectors for "combustion can #1," "combustion can #2," "combustion can #3," "combustion can #4," combustion can #5," combustion can #6," and "select all." Although the combustion cans 23 are identified by numerals, in practice the combustion cans 23 may include alphanumeric identifiers or serial numbers. In other words, the "#1" through "#6" numerals are used for illustrative purposes and are not intended to limit the scope of the present disclosure. Further, although radio button selectors are used in the list 42, it should be noted that any selection input element may be used such as a dropdown list, a checkbox, an input textbox, or the like. Additionally, in some embodiments, voice commands may be used to select the combustion cans 23 to listen to from the list 42. Thus, the controller 24 and/or the computing device 25 may include a microphone that is configured to receive sounds and the processor 28 and 29 may be configured to process the sounds to select the desired combustion cans 23 to listen to.

The user may use an input peripheral such as a mouse to move an arrow or hand selection icon around the GUI. When the user depresses and releases a button on the mouse and the selection icon is above a radio button selector, the radio button selector may toggle to a selected state if in a deselected state or may toggle to a deselected state if already in a selected state. Additionally, the input peripheral may include a touchscreen. When the user touches a portion of the touchscreen where a radio button selector is located, the radio button selector may toggle to a selected state if in a deselected state or may toggle to a deselected state if already in a selected state. Further, if the user selects the "select all" radio button selector, then any of the other radio button selectors for the combustion cans #1 through #6 that are already in the selected state may toggle to the deselected state and the "select all" radio button selector may toggle to the selected state.

In some embodiments, the combustion cans 23 in the combustion system 20 may be represented graphically, similar to FIG. 2, on the GUI 40. In this way, instead of, or in addition, to selecting the combustion cans 23 from the list 42, the user may select a graphical representation of the combustion can 23 on a visualization of the combustion system 20 to listen to audio output 34 from those particular combustion cans 23. Additionally, the user may select the combustion can 23 to listen to from the list 42 and the graphical representation of the combustion can 23 may be highlighted in the combustion system 20 displayed on the GUI 40. This may enable the user to visualize where each combustion can 23 is physically located relative to one another in the combustion system 20.

When the user selects a particular combustion can 23 to listen to, the GUI may display a visualization 46 of a sound wave representative of the audio emitted from the inside of the respective combustion can 23 as obtained by the sensor 22. Thus, the user may be able to visualize the sound wave on the GUI 40 via the visualization 46 that is being displayed by a display of the controller 24 and/or the computing device 25. Although the embodiment of the visualizations 46 depicted are time domain outputs (amplitude versus time), it should be should be appreciated that the visualizations 46 may be spectral outputs (frequency versus amplitude). A spectral output may enable a user to identify the frequency associated with any abnormality detected and may guide an action to be taken.

Further, the software application associated with the GUI may output a live feed of the audio for the selected combustion cans 23 to the respective audio output device 30 and/or 31 of the controller 24 and/or the computing device 25. Thus, in some embodiments the user may listen to the audio from the selected combustion cans 23 and/or view the sound wave associated with the audio of the selected combustion cans 23. Using both the audio output 34 and the visual representation 46 in conjunction may enable the user to double check a determination of whether an anomaly, event, or problem is present. For example, the sound wave visualization 46 may be used to confirm that a loud or unexpected noise was detected by the sensors 22 in the combustion can 23 during combustion and the noise was not due to some event near the operator using the computing device 25. That is, the audio output 34 and the sound wave visualization 46 may be used as a check on each other.

Using the list 42 on the GUI 40, the user may select the combustion can(s) 23 to listen to. For example, the user may select to listen to just one combustion can 23, may select to listen to the top half of combustion cans 23 (e.g., combustion can #1 through #3), may select to listen to the bottom half of combustion cans 23 (e.g., combustion can #4 through #6), or may select to listen to all of the combustion cans 23. In this ways, the user may detect whether an anomaly, event, or problem is present in the combustion cans 23 in general or on an individual basis by listening to audio output 34 representing the pressure within the combustion cans 23 during combustion. The audio output 34 may be provided in real-time or near real-time as the combustion is occurring. Also, the audio output 34 may be provided via the controller 24 and/or the computing device 25, which may be physically located away from the actual combustion system 20 (e.g., in a control room or in a separate building).

Further, using the input selector 44 for control alarms, the user GUI 40 may provide an input selection to the user to select whether to receive control alarms. Receiving information (e.g., type of alarm, status, parameters, timestamp) related to control alarms may be used in conjunction with the audio output 34 of the combustion cans 23 during combustion to perform diagnostics. For example, certain control alarms may relate to vibration above a threshold, oil pressure below a threshold, oil pressure above a threshold, bearing temperature above a threshold, cooling water failure, power failure, or the like. The user may view the control alarm that is currently activated and listen to the audio output 34 of the selected combustion cans 23 to determine that the irregular audio output 34 is caused by the event indicated by the control alarm. Likewise, when the user hears irregular audio output 34 from the combustion cans 23 during combustion and the control alarms are not triggered or activated, then the user may determine that the control alarms need to be recalibrated or checked to make sure they are operating properly.

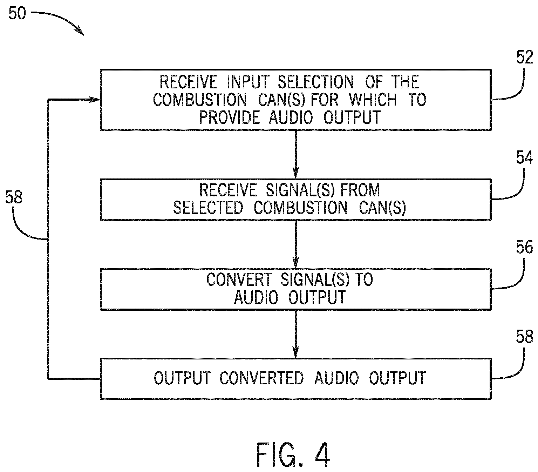

FIG. 4 is a flow chart illustrating an embodiment of a method 50 for detecting combustion anomalies, events, or problems via audio output, in accordance with an embodiment. Although the following description of the method 50 is described with reference to the processor 28 of the controller 24, it should be noted that the method 50 may be performed by other processors disposed on other devices that may be capable of communicating with the sensors 22, such as the processor 29 of the computing device 25 or other components associated with the turbine system 10. Additionally, although the following method 50 describes a number of operations that may be performed, it should be noted that the method 50 may be performed in a variety of suitable orders and all of the operations may not be performed. It should be appreciated that the method 50 may be wholly executed by the controller 24 or the execution may be distributed between the controller 24 and the computing device 25. Further, the method 50 may be implemented as computer instructions included in a software application stored on the memory 26 or 27. As previously discussed, the software application may be obtainable from a software distribution platform.

Referring now to the method 50, the processor 28 may receive (block 52) an input selection of the combustion cans 23 for which to provide audio output 34. The input selection may be entered by a user using the GUI 40 described above. For example, the user may select the combustion cans 23 from the list 42. The user may select a subset of combustion cans 23 (one or more but not all), or all of the combustion cans 23. Based on the input selection, the processor 28 may cause a network interface to tune-in to the respective sensors 22 associated with the selected combustion cans 23. Additionally or alternatively, the network interface may already be communicatively coupled to the sensors 22 associated with the selected combustion cans 23.

The processor 28 may receive (block 54) the signals from the sensors 22 of the selected combustion cans 23. As previously described, each sensor 22 may include a combustion dynamic pressure sensor that senses pressure waves or signals in the combustion can 23 and emits the signal.

Once the signals are received, the processor 28 may convert (block 56) the signals to the audio output 34. In some embodiments, the processor 28 may perform additional processing or calculations on the signal during conversion prior to output of the audio output 34. For example, the processor 28 may perform A-weighting, B-weighting, C-weighting, D-weighting, reverse A-weighting, reverse B-weighting, reverse C-weighting, reverse D-weighting, or the like. It should be appreciated that any type of suitable frequency-dependent amplification or filtering may be performed by the processor 28. It should also be appreciated that the audio output 34 may include the converted signals from a subset of combustion cans 23 (one or more but not all), or all of the combustion cans 23 depending on the combustion cans 23 selected by the user.

The processor 28 may output (block 58) the converted audio output 34 via the audio output device 30 or 31. The user may listen to the audio output 34 to detect whether there is an anomaly, event, or problem present in the combustion can 23 or the combustion system 20. That is, an irregular noise emitted from a particular combustion can 23 during combustion may be indicative of an issue with that respective combustion can 23 or with the combustion system 20 as a whole.

If the user selected to listen to the audio from a single combustion can 23 and determines that the audio output 34 is satisfactory (regular noise during combustion), then the method 50 may be repeated, as shown by arrow 58, and the user may select the next combustion can 23 to which to listen. The method 50 may be repeated until the user listens to all of the combustion cans 23 in the combustion system 20 or until the user identifies an anomaly, event, or problem in the combustion system 20 and performs a preventative action, as described above.

Technical effects of the subject matter include detecting a combustion anomaly, event, or problem in a combustion system 20 using audio output. The audio output 34 may be obtained via one or more sensors 22 in each of the combustion cans 23 in the combustion system 20. The sensors 22 may already be installed in the combustion system 20, and thus, no additional instrumentation is installed to perform the disclosed embodiments. The sensors 22 may sense pressure waves. Further, the sensors 22 may emit the signals to the controller 24 and/or the computing device 25, which may execute a software application to convert the signals to the audio output 34 to emit via the audio output devices 30 and 31. In addition, some embodiments enable the user to select the combustion cans 23 for which to provide the audio output 34 using a GUI 40, among other things.

This written description uses examples to disclose the subject matter, including the best mode, and also to enable any person skilled in the art to practice the subject matter, including making and using any devices or systems and performing any incorporated methods. The patentable scope of the subject matter is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following clauses:
1. A turbine system comprising:
   a combustion system comprising a plurality of combustion cans;
   a plurality of sensors, each of the plurality of sensors coupled to a respective combustion can of the plurality of combustion cans; and
   a controller comprising:
      a memory storing one or more processor-executable routines; and
      a processor configured to access and execute the one or more routines encoded by the memory wherein the one or more routines, when executed cause the processor to:
         receive one or more signals from the plurality of sensors;
         convert the one or more signals to audio output; and
         output the converted audio output via one or more audio output devices.
2. The turbine system of clause 1, wherein the plurality of sensors comprise combustion dynamic pressure sensors.
3. The turbine system of clause 2, wherein the combustion dynamic pressure sensors are configured to sense pressure waves.
4. The turbine system of clause 1, wherein the one or more routines, when executed cause the processor to receive an input selection from a graphical user interface (GUI) selecting one or more combustion cans of the plurality of combustion cans for which to provide audio output.
5. The turbine system of clause 4, wherein the input selection is received via a list that provides selection of a subset of the plurality of combustion cans or all of the plurality of combustion cans.
6. The turbine system of clause 4, wherein the GUI provides an input selector to receive control alarms related to the turbine system.
7. The turbine system of clause 4, wherein the input selection of the one or more of the plurality of combustion cans causes a visualization of a sound wave representative of the audio output to be displayed on the GUI for the respective one or more combustion cans of the selected plurality of combustion cans.
8. The turbine system of clause 1, wherein the one or more signals are indicative of pressure waves or vibrations within the plurality of combustion cans during combustion.
9. The turbine system of clause 1, wherein the converted audio output enables detection of anomalies, events, or problems present in the plurality of combustion cans, the combustion system, or both.
10. The turbine system of clause 1, wherein the one or more routines are downloaded as a software application from a software distribution platform.
11. A controller, comprising:
   a memory storing one or more processor-executable routines; and
   a processor configured to access and execute the one or more routines encoded by the memory wherein the one or more routines, when executed cause the processor to:
      receive one or more signals from a plurality of sensors, wherein each of the plurality of sensors are coupled to a respective combustion can of a plurality of combustion cans included in a combustion system of a turbine system;
      convert the one or more signals to audio output; and
      output the converted audio output via one or more audio output devices.
12. The controller of clause 11, wherein the plurality of sensors comprise combustion dynamic pressure sensors that sense pressure waves.
13. The controller of clause 11, wherein the one or more routines, when executed cause the processor to receive an input selection from a list on a graphical user interface (GUI) selecting one or more combustion cans of the plurality of combustion cans for which to provide audio output.
14. The controller of clause 13, wherein the list provides selection of a subset of the plurality of combustion cans or all of the plurality of combustion cans.
15. The controller of clause 13, wherein the input selection of the one or more of the plurality of combustion cans causes a visualization of a sound wave representative of the audio output to be displayed on the GUI for the respective one or more of the selected plurality of combustion cans.
16. The controller of clause 11, wherein the converted audio output enables detection of anomalies, events, or problems present in the plurality of combustion cans, the combustion system, or both.
17. One or more tangible, non-transitory computer-readable mediums comprising instructions that, when executed by one or more processors, cause the one or more processors to:
   receive one or more signals from a plurality of sensors, wherein each of the plurality of sensors are coupled to a respective combustion can of a plurality of combustion cans included in a combustion system of a turbine system, and wherein the signals are indicative of dynamic pressure inside each of the plurality of combustion cans during combustion;
   convert the one or more signals to audio output; and
   output the converted audio output via one or more audio output devices.
18. The one or more computer-readable mediums of clause 17, wherein the instructions, when executed by the processor, cause the processor to receive an input selection from a graphical user interface (GUI) selecting one or more combustion cans of the plurality of combustion cans for which to provide audio output.
19. The one or more computer-readable mediums of clause 18, wherein the input selection comprises a subset of the plurality of combustion cans or all of the plurality of combustion cans.
20. The one or more computer-readable mediums of clause 17, wherein the one or more computer-readable mediums are included in a smartphone, a laptop, or a personal computer that is physically located remote from the combustion system.

## Claims

1. A turbine system (10) comprising:
a combustion system (20) comprising a plurality of combustion cans (23);
a plurality of sensors (22), each of the plurality of sensors (22) coupled to a respective combustion can (23) of the plurality of combustion cans (23); and
a controller (24) comprising:
a memory (26, 27) storing one or more processor-executable routines; and
a processor (28, 29) configured to access and execute the one or more routines encoded by the memory (26, 27) wherein the one or more routines, when executed cause the processor (28, 29) to:
receive one or more signals from the plurality of sensors (22);
convert the one or more signals to audio output (34); and
output the converted audio output (34) via one or more audio output devices (30, 31).

2. The turbine system (10) of claim 1, wherein the plurality of sensors (22) comprise combustion dynamic pressure sensors and wherein the combustion dynamic pressure sensors (22) are configured to sense pressure waves.

3. The turbine system (10) of claim 1, wherein the one or more routines, when executed cause the processor (28, 29) to receive an input selection from a graphical user interface (GUI) (40) selecting one or more combustion cans (23) of the plurality of combustion cans (23) for which to provide audio output (34); wherein the GUI (40) provides an input selector to receive control alarms related to the turbine system (10) and wherein the input selection is received via a list (42) that provides selection of a subset of the plurality of combustion cans (23) or all of the plurality of combustion cans (23).

4. The turbine system (10) of claim 3, wherein the input selection of the one or more of the plurality of combustion cans (23) causes a visualization of a sound wave representative of the audio output (34) to be displayed on the GUI (40) for the respective one or more combustion cans (23) of the selected plurality of combustion cans (23).

5. The turbine system (10) of claim 1, wherein the one or more signals are indicative of pressure waves or vibrations within the plurality of combustion cans (23) during combustion.

6. The turbine system (10) of claim 1, wherein the converted audio output (34) enables detection of anomalies, events, or problems present in the plurality of combustion cans (23), the combustion system (20), or both.

7. The turbine system (10) of claim 1, wherein the one or more routines are downloaded as a software application from a software distribution platform.

8. A controller (24), comprising:
a memory (26, 27) storing one or more processor-executable routines; and
a processor (28, 29) configured to access and execute the one or more routines encoded by the memory (26, 27) wherein the one or more routines, when executed cause the processor (28, 29) to:
receive one or more signals from a plurality of sensors (22), wherein each of the plurality of sensors (22) are coupled to a respective combustion can (23) of a plurality of combustion cans (23) included in a combustion system (20) of a turbine system (10);
convert the one or more signals to audio output (34); and
output the converted audio output (34) via one or more audio output devices (30, 31).

9. The controller (24) of claim 8, wherein the plurality of sensors (22) comprise combustion dynamic pressure sensors that sense pressure waves.

10. The controller (24) of claim 8, wherein the one or more routines, when executed cause the processor (28, 29) to receive an input selection from a list (42) on a graphical user interface (GUI) (40) selecting one or more combustion cans (23) of the plurality of combustion cans (23) for which to provide audio output (34).

11. The controller (24) of claim 10, wherein the list (42) provides selection of a subset of the plurality of combustion cans (23) or all of the plurality of combustion cans (23).

12. The controller (24) of claim 10, wherein the input selection of the one or more of the plurality of combustion cans (23) causes a visualization of a sound wave representative of the audio output (34) to be displayed on the GUI (40) for the respective one or more of the selected plurality of combustion cans (23).

13. The controller (24) of claim 8, wherein the converted audio output (34) enables detection of anomalies, events, or problems present in the plurality of combustion cans (23), the combustion system (20), or both.

14. One or more tangible, non-transitory computer-readable mediums (26, 27) comprising instructions that, when executed by one or more processors (28, 29), cause the one or more processors (28, 29) to:
receive one or more signals from a plurality of sensors (22), wherein each of the plurality of sensors (22) are coupled to a respective combustion can (23) of a plurality of combustion cans (23) included in a combustion system (20) of a turbine system, and wherein the signals are indicative of dynamic pressure inside each of the plurality of combustion cans (23) during combustion;convert the one or more signals to audio output (34); and
output the converted audio output (34) via one or more audio output devices (30, 31).

15. The one or more computer-readable mediums (26, 27) of claim 14, wherein the instructions, when executed by the processor (28 29), cause the processor (28, 29) to receive an input selection from a graphical user interface (GUI) (40) selecting one or more combustion cans (23) of the plurality of combustion cans (23) for which to provide audio output (34).
